# EUROPÄISCHE PATENTSCHRIFT

(11) **EP 3 372 449 B1**
(45) Veröffentlichungstag und Bekanntmachung des Hinweises auf die Patenterteilung: **07.06.2023**
(21) Anmeldenummer: 18157332.0
(22) Anmeldetag: 19.02.2018
(51) Int. Cl.: B60Q 9/00, G08G 1/16

(54) **TECHNIK ZUR ÜBERWACHUNG EINES TOTWINKELBEREICHS**
TECHNIQUE FOR MONITORING A DEAD ANGLE AREA
TECHNOLOGIE DE SURVEILLANCE D'UNE ZONE D'ANGLE MORT

(30) Priorität: 08.03.2017 DE 102017002221
(43) Veröffentlichungstag der Anmeldung: 12.09.2018
(73) Patentinhaber: MAN Truck & Bus SE, 80995 München (DE)
(72) Erfinder: Mohra, Holger, 80805 München (DE); Arnold, Claus, 93161 Sinzing (DE); Johannes, Güllich, 85229 Markt Indersdorf (DE)
(74) Vertreter: v. Bezold & Partner Patentanwälte - PartG mbB

(56) Entgegenhaltungen:
- EP-A1- 2 138 351
- EP-A2- 2 106 968
- EP-A2- 2 899 083
- DE-B3-102007 027 529
- JP-A- 2000 272 414
- JP-A- 2004 331 023
- JP-A- 2005 145 292
- US-A1- 2003 141 965
- US-A1- 2004 046 647
- US-A1- 2005 168 331

## Beschreibung

Die vorliegende Erfindung betrifft die Überwachung eines Totwinkelbereichs eines Kraftfahrzeugs. Insbesondere sind eine Vorrichtung zur Signalisierung eines Objekts im Totwinkelbereich eines Kraftfahrzeugs und ein damit ausgestattetes Kraftfahrzeug beschrieben.

Kraftfahrzeugfahrer, insbesondere Fahrer von Nutzfahrzeugen, sind während der Fahrt durch viele verschiedene Reize in der Umgebung des Fahrzeugs (beispielsweise einer Baustelle oder einer Haltestelle) beeinflusst, welche der Fahrer kontrollieren und auf die der Fahrer bei Gefahr reagieren muss. Darüber hinaus muss ein Fahrer eines Nutzfahrzeugs auf zahlreiche interne Meldungen (beispielsweise Fehlermeldungen oder Assistenzsysteme) und externen Meldungen (beispielsweise dynamische Verkehrszeichen, Sondersignale von Einsatzfahrzeugen oder Telefonanrufe) achten, so dass die Gefahr besteht, einzelne dieser Signale zu überhören oder zu verwechseln.

Diese Gefahr ist besonders schwerwiegend beim Spurwechsel auf mehrspurigen Straßen, da sich andere Fahrzeuge im toten Winkel des Kraftfahrzeugs befinden können bzw. sich schnell nähern und dadurch übersehen werden können. Um diese Gefahrenquelle zu minimieren wird in vielen PKWs und LKWs ein Spurwechselassistent (auch: "Totwinkelhilfe") eingesetzt, der vor anderen Fahrzeugen im Totwinkelbereich warnt.

Das Dokument US 2003/141965A1 beschreibt ein optisches Kollisionswarnsystem, welches an einem Anhänger angebracht und über die Außenspiegel einer Zugmaschine für den Fahrer einsehbar ist. Zusätzlich kann ein tragbares Gerät eine Audiowarnung in der Fahrerkabine ausgeben.

Das Dokument EP 2 106 968 A2 beschreibt ein Warnsystem zur Überwachung eines Totwinkelbereichs, in dem ein optisches Blinksignal mit einer von der Nähe eines erfassten Hindernisses abhängigen Frequenz ausgegeben wird.

Das Dokument US 2004/046647 A1 beschreibt ein Fahrzeugsicherheitssensorsystem mit verschiedenfarbigen Lichtern und begleitenden Sprachwarnungen bzw. Sprachkommandos, deren jeweilige Aktivierung von der Nähe eines Hindernisses abhängt.

Das Dokument DE 10 2007 027529 B3 und das Dokument EP 2 138 351 A1 beschreiben eine Warneinrichtung mit einem Sensorsystem zur Erfassung von Hindernissen im Totwinkelbereich, welche ein Warnsignal in optischer Form wiedergibt, wenn ein Hindernis im Totwinkelbereich erfasst wird. Das Warnsignal kann entweder durch eine vom Spurwechselanzeiger abweichende Farbe oder durch einen eigenen, die Spurwechselanzeige umrandenden, Anzeigenbereich angezeigt werden.

Das Dokument EP 2 899 083 A2 beschreibt ein Fahrerassistenzsystem, in dem ein Seitenbereich eines Fahrzeugs überwacht und ein erstes Warnsignal ausgegeben wird, wenn der Fahrer einen Fahrspurwechselanzeiger betätigt und wenigstens ein Fahrzeug auf der Seitenspur erfasst wird. Ein zweites Warnsignal wird ausgegeben, wenn zudem ein Spurwechsel auf diese Seitenspur erkannt wird.

Das Dokument JP 2000-272414 A beschreibt einen Abbiegegeräuschgenerator für Fahrzeuge, der ein Warngeräusch generiert, wenn die Fahrzeuggeschwindigkeit niedriger ist als ein vorbestimmter Wert und ein Spurwechsel in Abhängigkeit von von einem Seitenmonitor bereitgestellter Information als gefährlich bewertet wird.

Das Dokument JP 2005-145292 A beschreibt eine Fahrassistenzvorrichtung mit einer Steuerung, die das Gefährdungspotential berechnet, das von einem nachfolgenden Fahrzeug ausgeht. Das Gefährdungspotential wird dem Fahrer bspw. über ein Blinkergeräusch vermittelt.

Das Dokument DE 10 2005 054 972 A1 beschreibt ein Fahrerassistenzsystem zur Totwinkelüberwachung. Um die Anzahl der Fahrerwarnungen zu reduzieren, wird vor der Ausgabe einer Fahrerwarnung geprüft, ob ein Spurwechsel aufgrund der gegebenen Verkehrsinfrastruktur durchführbar ist. Fahrerwarnungen werden unterdrückt, falls als Ergebnis der Überprüfung ein Spurwechsel nicht möglich ist.

Diese Hilfestellung kann die Unfallgefahr zwar reduzieren, aber nur wenn das entsprechende Warnsignal vom Fahrer richtig interpretiert wird und nicht verwechselt, überhört oder ignoriert wird. Das herkömmliche Warnsignal ist jedoch ein beliebiger Signalton, bei dem diese Fehlerquelle nicht ausgeschlossen ist aufgrund der zahlreichen anderen internen und externen Meldungen, die den Fahrer umgeben.

Somit ist es eine Aufgabe der vorliegenden Erfindung, eine Technik zur Überwachung eines Totwinkelbereichs bereitzustellen, dessen Warnsignal eindeutig einer Gefahr im Totwinkelbereich zugeordnet werden kann. Eine weitere oder alternative Aufgabe ist, zu verhindern, dass das Warnsignal überhört wird und selbst eine Gefahrenquelle darstellt.

Diese Aufgabe oder Aufgaben werden durch eine Vorrichtung bzw. ein Fahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt umfasst eine Vorrichtung zur Überwachung eines Totwinkelbereichs eines Kraftfahrzeugs mindestens einen Sensor oder eine Schnittstelle des mindestens einen Sensors, der dazu ausgebildet ist, Objekte im Totwinkelbereich des Kraftfahrzeugs zu erfassen; eine Betätigungseinrichtung, die dazu ausgebildet ist, einen Fahrtrichtungsanzeiger zu setzen; einen Signalgeber, der dazu ausgebildet ist, im Kraftfahrzeug ein erstes Signal zur Bestätigung des gesetzten Fahrtrichtungsanzeigers auszugeben, und ein vom ersten Signal verschiedenes zweites Signal desselben Signalmediums wie des ersten Signals auszugeben, falls der mindestens eine Sensor ein Objekt im Totwinkelbereich des Kraftfahrzeugs erfasst.

Das zweite Signal kann auch als Warnsignal bezeichnet werden. Dadurch, dass das zweite Signal zur Warnung des Fahrers vom selben Signalgeber mittels desselben Signalmediums ausgegeben wird, das auch die Bestätigung des gesetzten Fahrtrichtungsanzeigers ausgibt, ist der Zusammenhang zwischen einem beabsichtigten Fahrspurwechsel und der Warnung vor einem Objekt im Totwinkelbereich unzweideutig dem Fahrer des Kraftfahrzeugs signalisiert, d. h. ein erkennbarer Zusammenhang gegeben. Der Totwinkelbereich kann auch als Warnzone oder Gefahrenbereich bezeichnet werden.

Beispielsweise umfasst der Signalgeber mindestens einen Mitteltöner-Lautsprecher zur Erzeugung des ersten Signals und mindestens einen Hochtöner-Lautsprecher zur Erzeugung des zweiten Signals.

Die Ausgabe des ersten Signals und des zweiten Signals "im Kraftfahrzeug" kann durch eine Ausgabe innerhalb einer Fahrzeugkabine (beispielsweise innerhalb eines Fahrerhauses) des Kraftfahrzeugs realisiert sein.

Der Zusammenhang kann durch eine oder mehrere übereinstimmende Eigenschaften des ersten und des zweiten Signals signalisiert sein. Beispielsweise können das erste und das zweite Signal übereinstimmende Klangelemente und/oder visuelle Elemente umfassen, oder können ein Ort der Signalausgabe und/oder eine Signalquelle des ersten und zweiten Signals übereinstimmen. Alternativ oder ergänzend kann das zweite Signal eine schnellere und/oder intensivere (beispielsweise lautere oder hellere) Wiedergabe oder Wiederholung des ersten Signals umfassen.

Der mindestens eine Sensor kann zur Erfassung von Verkehrsteilnehmern ausgebildet sein. Das Objekt kann ein Fußgänger, ein Radfahrer und/oder ein anderes Kraftfahrzeug sein.

Der Begriff "Totwinkelbereich" kann diejenigen Bereiche umfassen, welche sich hinter dem oder seitlich an das Kraftfahrzeug anschließen (und ggf. durch Rückspiegel des Kraftfahrzeugs nicht einsehbar sind). Beispielsweise kann der Totwinkelbereich einen sich an der rechten Seite des Kraftfahrzeugs anschließenden Fahrbahnbereich umfassen. Alternativ oder ergänzend kann der Begriff "Totwinkelbereich" vom Kraftfahrzeug entferntere oder beabstandete Bereiche (beispielsweise hinter dem Kraftfahrzeug oder seitlich vom Kraftfahrzeug) umfassen. Dabei können beispielsweise schnell von hinten oder der Seite herannahende Objekte (welche sich beispielsweise noch hinter dem Kraftfahrzeug befinden, z. B. in einem Abstand von 30 bis 40 Metern zum Kraftfahrzeug) mittels einem der Sensoren im Totwinkelbereich erfasst werden.

Der Fahrtrichtungsanzeiger kann bei einem Fahrspurwechsel gesetzt sein. Der Fahrtrichtungsanzeiger kann manuell mittels der Betätigungseinrichtung gesetzt sein und/oder vom Kraftfahrzeug (beispielsweise der Vorrichtung) in Reaktion auf die Bestimmung eines Fahrspurwechsels gesetzt sein. Das Kraftfahrzeug (beispielsweise die Vorrichtung) kann dazu ausgebildet sein, einen (beabsichtigten oder in der Ausführung begriffenen) Fahrspurwechsel zu bestimmen, beispielsweise durch Erkennung einer Lenkbewegung (insbesondere eines Lenkwinkels) und/oder eines Fahrbahnverlaufs (insbesondere von Fahrbahnmarkierungen).

Der Begriff "Fahrspurwechsel" kann einen Wechsel des Kraftfahrzeugs zwischen benachbarten Fahrspuren, ein Abbiegen des Kraftfahrzeugs (beispielsweise an einer Kreuzung, einem Kreisverkehr oder einer Einfahrt) und/oder ein Rangieren (beispielsweise an einem Parkplatz) des Kraftfahrzeugs einschließen.

Der mindestens eine Sensor kann zur Erfassung von Abstand, Ausrichtung und/oder Geschwindigkeit des Objekts (z. B. bezüglich des Kraftfahrzeugs) ausgebildet sein. Der mindestens eine Sensor kann einen oder mehrere Radarsensoren umfassen. Alternativ oder ergänzend kann die Erfassung von Umgebungsbereichen (insbesondere des Totwinkelbereichs) des Kraftfahrzeugs, der Objekte und/oder einer Verkehrsinfrastruktur (insbesondere der Fahrbahnmarkierungen) LiDAR-Sensoren (für "Light Detection And Ranging"), Ultraschallsensoren und/oder Bildsensoren verwenden. Hierzu kann die Vorrichtung ferner eine oder mehrere Heck- und/oder Frontkameras umfassen oder mit solchen an der Außenhaut des Kraftfahrzeugs angeordneten Kameras in Signalaustausch stehen oder bringbar sein. Mindestens einer der Sensoren kann am Kraftfahrzeug angeordnet oder anordenbar sein. Alternativ oder ergänzend kann mindestens einer der Sensoren an einem Anhänger oder Sattelauflieger angeordnet sein. Die Sensorschnittstelle kann eine Anhängersteckdose umfassen.

Der Signalgeber kann ferner dazu ausgebildet sein, das erste Signal und das zweite Signal an derselben Stelle innerhalb des Kraftfahrzeugs auszugeben.

Erfindungsgemäß sind das erste Signal und das zweite Signal jeweils akustische Signale; d. h., das gemeinsame Signalmedium umfasst Schall im Kraftfahrzeug. Das erste Signal und das zweite Signal umfassen eine Signalfolge mit einem gemeinsamen Grundsignal. Sowohl das erste Signal als auch das zweite Signal sind ein Audiosignal und können zusätzlich ein optisches Signal innerhalb des Kraftfahrzeugs umfassen. Für das Audiosignal kann das Grundsignal ein (beispielsweise aufgezeichneter oder synthetisierter) Klang oder ein Klangmuster umfassen. Ergänzend kann das Grundsignal ein grafisches Symbol für das optische Signal umfassen. Das grafische Symbol kann durch eine hinterleuchtete Maske oder eine pixelbasierte Anzeige erzeugt werden.

Das erste Signal und das zweite Signal können Wiederholungen des Grundsignals umfassen. Die Wiederholung des Grundsignals kann im ersten Signal eine größere Periodizität aufweisen als die Wiederholung des Grundsignals im zweiten Signal.

Das Audiosignal kann im zweiten Signal relativ zum Audiosignal im ersten Signal zu einer höheren Frequenz verschoben oder skaliert sein. In Kombination kann das Grundsignal ein optisches Signal umfassen.

Das optische Signal kann im zweiten Signal relativ zum optischen Signal im ersten Signal zu einer größeren Wellenlänge verschoben sein.

Der Signalgeber kann dazu ausgebildet sein, bei gesetztem Fahrtrichtungsanzeiger und keinem erfassten Objekt im Totwinkelbereich das erste Signal auszugeben. Alternativ oder ergänzend kann der Signalgeber dazu ausgebildet sein, im Fall des erfassten Objekts das zweite Signal auszugeben, wenn ein Fahrspurwechsel des Kraftfahrzeugs bestimmt ist. Der Fahr-spurwechsel kann aufgrund des gesetzten Fahrtrichtungsanzeigers, eines Lenkwinkels des Kraftfahrzeugs, einer Änderung des Lenkwinkels und/oder einer Lage des Kraftfahrzeugs relativ zu (beispielsweise optisch erfassten) Fahrbahnmarkierungen bestimmt werden. Beispielsweise kann das zweite Signal unabhängig davon, ob der Fahrtrichtungsanzeiger gesetzt ist, ausgegeben werden.

Der Fahrspurwechsel kann aufgrund einer Annäherung des Kraftfahrzeugs an eine Linie der Fahrbahnmarkierung, eines Winkels zwischen Geschwindigkeitsrichtung des Kraftfahrzeugs und der Fahrbahnmarkierung oder eines Überquerens der Fahrbahnmarkierung bestimmt sein. Das Kraftfahrzeug kann eine Frontkamera und Grafikprozessoren umfassen, welche dazu ausgebildet sind, die Fahrbahnmarkierungen zu erfassen.

Wird ein Objekt im Totwinkelbereich erfasst, kann das zweite Signal ausgegeben werden, solange das Objekt erfasst wird. Sobald das Objekt nicht mehr erfasst wird, kann die Ausgabe des zweiten Signals enden. Erfindungsgemäß ist der Signalgeber dazu ausgebildet, während ein Objekt erfasst wird, das zweite Signal abwechselnd mit dem ersten Signal auszugeben, beispielsweise solange der Fahrtrichtungsanzeiger gesetzt ist oder ein Fahrspurwechsel bestimmt ist.

Optional ist die Ausgabe des zweiten Signals auf eine vorbestimmte Zeitdauer begrenzt. Der Signalgeber kann dazu ausgebildet sein, im Fall des erfassten Objekts die Ausgabe des zwei-ten Signals nach der vorbestimmten Zeitdauer auszusetzen oder zu beenden. Die Ausgabe des zweiten Signals kann nach der vorbestimmten Zeitdauer enden, beispielsweise wenn das Objekt weiterhin erfasst wird. Der Signalgeber kann dazu ausgebildet sein, die Ausgabe des zweiten Signals in Reaktion auf das Erfassen des Objekts zu beginnen und, nachdem die vorbestimmte Zeitdauer verstrichen ist, bei fortdauerndem Erfassen des Objekts zu beenden. Nach der vorbestimmten Zeitdauer kann statt des zweiten Signals das erste Signal ausgegeben werden, beispielsweise solange der Fahrtrichtungsanzeiger gesetzt ist oder ein Fahrspur-wechsel bestimmt ist. Erfasst der mindestens eine Sensor eine Änderung des Objekts, beispielsweise eine weitere Annäherung des Objekts an das Kraftfahrzeug, kann die Ausgabe des zweiten Signals fortgesetzt oder wiederaufgenommen werden. Ein weiterer Aspekt betrifft ein Kraftfahrzeug mit einer Vorrichtung zur Überwachung eines Totwinkelbereichs des Kraftfahrzeugs gemäß einer Ausgestaltung des Vorrichtungsaspekts. Mindestens einer der Sensoren kann seitlich am Kraftfahrzeug angeordnet sein. Das Kraftfahrzeug kann ein Nutzfahrzeug sein, insbesondere ein Lastkraftwagen (LKW), ein Zugfahrzeug (beispielsweise der LKW in einem LKW-Gespann oder eine Sattelzugmaschine) oder ein Bus (beispielsweise für den Stadtverkehr, Nahverkehr oder Fernverkehr). Der mindestens eine Sensor kann statt am Kraftfahrzeug, oder ergänzend zu mindestens einem Sensor am Kraftfahrzeug, an einem Anhänger bzw. Sattelauflieger angebracht oder anbringbar sein.

Ein weiterer Aspekt betrifft ein Verfahren zur Herstellung und/oder Konfiguration eines Kraftfahrzeugs, insbesondere eines Nutzfahrzeugs. Das Verfahren umfasst die Installation und/oder Konfiguration einer Vorrichtung zur Überwachung eines Totwinkelbereichs des Kraftfahrzeugs gemäß dem Vorrichtungsaspekt. Das Verfahren kann ferner Schritte des Bereitstellens eines oder mehrerer Merkmale des Vorrichtungsaspekts umfassen. Weitere Einzelheiten und Vorteile der Erfindung werden im Folgenden unter Bezug auf die beigefügten Zeichnungen beschrieben. Es zeigen:
- Figur 1: ein schematisches Blockschaubild eines ersten Ausführungsbeispiels einer Vorrichtung zur Überwachung eines Totwinkelbereichs eines Kraftfahrzeugs;
- Figur 2: eine schematische grafische Darstellung eines ersten Signals für ein zweites Ausführungsbeispiel der Vorrichtung zur Überwachung des Totwinkelbereichs;
- Figur 3: eine schematische Seitenansicht eines Kraftfahrzeugs, in dem eines der Ausführungsbeispiele der Vorrichtung implementierbar ist;
- Figur 4: schematisch einen Signalgeber für eines der Ausführungsbeispiele der Vorrichtung;
- Figur 5: eine schematische grafische Darstellung eines zweiten Signals für das zweite Ausführungsbeispiel der Vorrichtung;
- Figur 6: eine schematische Seitenansicht des Kraftfahrzeugs bei einer beispielhaften Erfassung eines Objekts im Totwinkelbereich;
- Figur 7: eine schematische Darstellung eines Signalgebers in Reaktion auf die Erfassung eines Objekts im Totwinkelbereich, beispielsweise in der Situation der Figur 6;
- Figur 8A: eine erste Implementierung des ersten Signals für eines der Ausführungsbeispiele der Vorrichtung;
- Figur 8B: eine schematische grafische Darstellung des zweiten Signals, das im Zusammenhang mit dem ersten Signal der Figur 8A implementierbar ist;
- Figur 9A: eine zweite Implementierung des ersten Signals für eines der Ausführungsbeispiele der Vorrichtung; und
- Figur 9B: eine schematische grafische Darstellung des zweiten Signals, das im Zusammenhang mit dem ersten Signal der Figur 9A implementierbar ist.

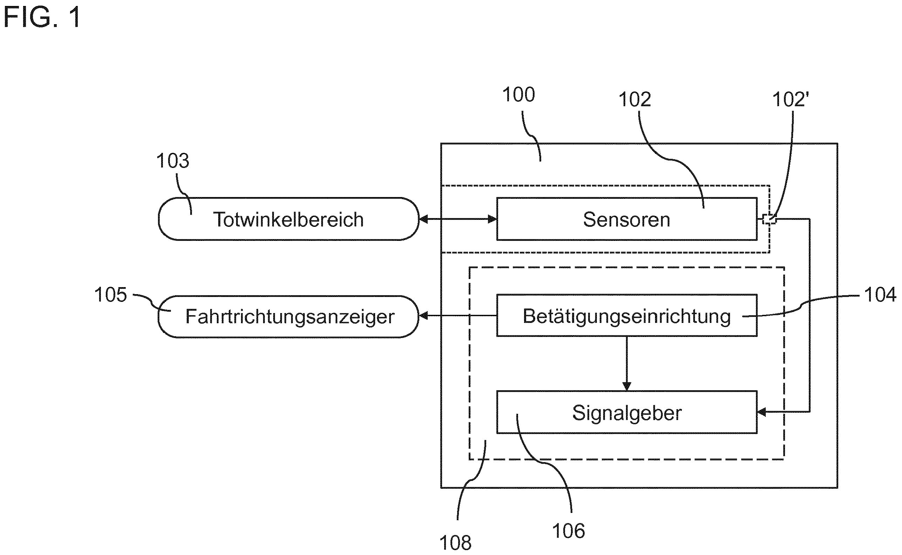

Figur 1 zeigt schematisch ein Blockschaltbild eines ersten Ausführungsbeispiels einer allgemein mit Bezugszeichen 100 bezeichneten Vorrichtung zur Überwachung eines Totwinkelbereichs eines Kraftfahrzeugs. Die Vorrichtung 100 umfasst mindestens einen Sensor 102, der dazu ausgebildet ist, Objekte im Totwinkelbereich 103 des Kraftfahrzeugs zu erfassen. Ferner umfasst die Vorrichtung 100 eine Betätigungseinrichtung 104, mittels der ein Fahrtrichtungsanzeiger 105 gesetzt werden kann; und einen Signalgeber 106, der bei gesetztem Fahrtrichtungsanzeiger 105 ein erstes Signal zur Bestätigung des gesetzten Fahrtrichtungsanzeigers ausgibt. Der Signalgeber 106 ist ferner dazu ausgebildet, ein vom ersten Signal verschiedenes zweites Signal auszugeben, falls der mindestens eine Sensor 102 ein Objekt im Totwinkelbereich 103 des Kraftfahrzeugs erfasst. Das erste Signal und das zweite Signal nutzen dasselbe Signalmedium.

Der Signalgeber 106 gibt das erste und das zweite Signal in der Umgebung des Fahrers innerhalb des Kraftfahrzeugs aus. Hierzu sind die Betätigungseinrichtung 104 und der Signalgeber 106 in einer Fahrzeugkabine 108 des Kraftfahrzeugs, beispielsweise einem Fahrerhaus eines Nutzfahrzeugs, angeordnet. Sowohl das erste als auch das zweite Signal sind ein akustisches Signal und können zusätzlich ein optisches Signal sein. Vorzugsweise ist das zweite Signal gleich dem ersten Signal mit einer höheren Wiederholungsrate und/oder höheren Klangfrequenz (im Fall des akustischen Signals) und/oder anderen Farbe (beispielsweise rot statt gelb im Fall eines optischen Signals) und/oder einer höheren Signalintensität (beispielsweise einem höheren Schalldruckpegel im Fall des akustischen Signals).

Das erste Signal kann sowohl lediglich ein akustisches Signal als auch ein akustisches und optisches Signal umfassen. Das zweite Signal umfasst ein vom akustischen Teil des ersten Signals abgeleitetes akustisches Signal. Ergänzend kann das zweite Signal ein vom optischen Teil des ersten Signals abgeleitetes optisches Signal umfassen. Beispielsweise kann die Vorrichtung 100 zum Betrieb in zwei oder mehr Modi ausgebildet sein. In einem ersten Modus ist das zweite Signal ein akustisches Signal, und in einem zweiten Modus ist das zweite Signal ein optisches Signal. Die Vorrichtung 100 kann ferner dazu ausgebildet sein, beispielsweise über eine oder mehrere Multifunktionstasten am Lenkrad des Kraftfahrzeugs oder durch Drücken eines Lenkstockschalters (beispielsweise in Längsrichtung) die Modi zu wechseln (beispielsweise nachträglich zu verstellen).

Alternativ oder ergänzend kann die Vorrichtung 100 dazu ausgebildet sein. die Intensität (beispielsweise die Lautstärke) oder die Frequenz (beispielsweise die Tonhöhe) des zweiten Signals (mittels Multifunktionstasten oder des Lenkstockschalters) einzustellen.

In einer beispielhaften Implementierung des ersten Ausführungsbeispiels wird der Fahrer bei einem Fahrspurwechsel gewarnt, indem der Fahrer neben optischen Signalen ein akustisches zweites Signal erhält, das in das typische, gewohnte Blinkergeräusch als erstes Signal zur Bestätigung des gesetzten Fahrtrichtungsanzeigers 105 integriert ist oder auf diesem aufbaut. Erfindungsgemäß setzen sich sowohl das erste als auch das zweite Signal aus einem gemeinsamen Grundsignal zusammen. Vorzugsweise ist das Grundsignal das Ticken eines Blinkers. Beim ersten Signal wird das Grundsignal mit einer ersten Frequenz wiederholt, beispielsweise mit einer Periodizität von 1,5 Sekunden. Beim zweiten Signal wird das Grundsignal mit einer höheren zweiten Frequenz wiederholt, beispielsweise der doppelten Frequenz (entsprechend der halben Periodizität) der ersten Frequenz.

Das Grundsignal (beispielsweise das Blinker-Ticken) ist ein Signal, das jeder Fahrer automatisiert dem beabsichtigten Spurwechselvorgang oder Abbiegevorgang zuordnet. Die dem Fahrer bekannte Wiederholungsfrequenz des Grundsignals wird, wenn sich ein Objekt (beispielsweise ein anderes Fahrzeug) im Totwinkelbereich (d. h. im Gefahrenbereich, der von der Vorrichtung 100 überwacht wird) befindet, auf die zweite Frequenz erhöht. Durch diese Veränderung wird die automatisierte Signalaufnahme des ersten Signals (d. h. des Grundsignals mit der gewohnten ersten Frequenz) des Fahrers unterbrochen, und der Fahrer kann das zweite Signal als Warnung sofort mit seinem Fehler beim Spurwechselvorgang oder Abbiegevorgang in Verbindung bringen.

Das Blinker-Ticken ist ein Beispiel für ein akustisches erstes Signal. Die vorstehend beschriebene Erhöhung einer Wiederholungsfrequenz von einer ersten Frequenz zu einer zweiten Frequenz ist auch auf ein optisches erstes Signal anwendbar. Beispielsweise kann das zweite Signal ein schnelleres Blinken einer herkömmlichen Blinker-Signalleuchte (als Signalgeber 106 oder Teil dessen) umfassen. Aus diesem Grund kann auf eine nähere Beschreibung von optischen oder anderen Signalen, die alternativ oder zusätzlich Teil des ersten und des zweiten Signals sein können, verzichtet werden.

In einer Implementierung der Vorrichtung 100, die mit jedem Ausführungsbeispiel kompatibel ist, wird bei Erfassung eines Objekts im Totwinkelbereich 103 das zweite Signal (beispielsweise das Blinker-Ticken mit der erhöhten zweiten Frequenz) für eine kurze Zeit (beispielsweise 1 bis 3 Sekunden, vorzugsweise ca. 2 Sekunden) ausgegeben. Diese Zeitdauer ist vom Hersteller des Kraftfahrzeugs festgelegt. Durch die Entkoppelung der Zeitdauer, in der das zweite Signal vom Signalgeber 106 ausgegeben wird, von der Zeitspanne, in der das Objekt im Totwinkelbereich 103 erfasst wird, wird verhindert, dass sich der Fahrer nach wiederholter zuverlässiger Objekt-Erfassung auf die Vorrichtung ausschließlich verlässt, d. h. den Blick in den Rückspiegel und den Schulterblick unterlässt.

Plant ein Fahrzeugführer auf einer mehrspurigen Straße, den Fahrstreifen zu wechseln, muss sich der Fahrzeugführer über Fahrzeuge in seinem Umfeld informieren und den Fahrtrichtungsanzeiger 105 mittels der Betätigungseinrichtung 104 setzen. Schätzt der Fahrer die Situation so ein, dass ein Fahrspurwechsel möglich ist, wird der Fahrer im Normalfall den Fahrtrichtungsanzeiger 105 setzen, bevor der Fahrer seine Fahrspur allmählich verlässt.

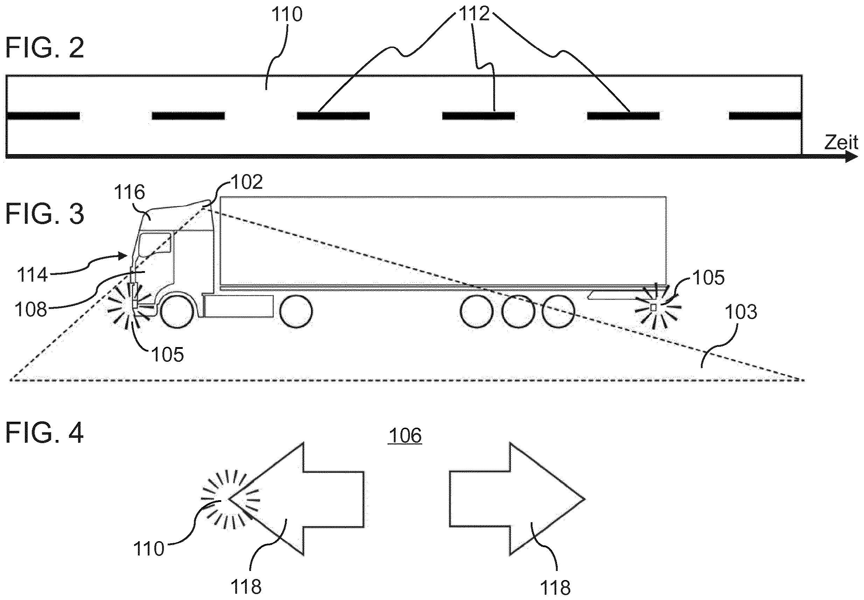

Figur 2 zeigt in einer schematischen grafischen Darstellung das vom Signalgeber 106 bei gesetztem Fahrtrichtungsanzeiger 105 ausgegebene erste Signal 110 als Funktion der Zeit. Beispielsweise setzt sich das erste Signal 110 aus sich mit der ersten Frequenz periodisch wiederholenden Grundsignalen 112 zusammen.

Figur 3 zeigt in einer schematischen Seitenansicht ein Nutzfahrzeug 114, beispielsweise eine Sattelzugmaschine. Mindestens einer der Sensoren 102 ist beispielsweise am Dach 116 (beispielsweise an einem Luftleitblech) seitlich zum Fahrzeug 114 angeordnet. Alternativ oder in Kombination ist mindestens einer der Sensoren 102 (beispielsweise ein RadarSensor) im Bereich des Fahrzeugrahmens des Kraftfahrzeugs angeordnet. Der Sensor 102 erfasst, beispielsweise durch einen oder mehrere Radarstrahlen, den Totwinkelbereich 103. Der Totwinkelbereich 103 kann sich im Fall einer Sattelzugmaschine entgegen der Fahrtrichtung über das Ende eines angehängten Sattelaufliegers erstrecken. Dadurch kann der Sensor 102 auch schnell herannahende Fahrzeuge frühzeitig erfassen.

Beispielsweise erfasst der Radarsensor 102 Abstand und Geschwindigkeit eines herannahenden Fahrzeugs (beispielsweise relativ zum Kraftfahrzeug 114). Fahrzeuge hinter dem Ende des Sattelaufliegers werden erfasst, falls die Geschwindigkeit des herannahenden Fahrzeugs größer ist als die Fahrgeschwindigkeit des Kraftfahrzeugs 114 und/oder falls ein von Abstand und Relativgeschwindigkeit abhängendes Kriterium erfüllt ist.

In der in Figur 3 schematisch dargestellten Situation wird kein Objekt im Totwinkelbereich 103 erfasst, so dass innerhalb der Fahrzeugkabine 108 des Kraftfahrzeugs 114 das erste Signal 110 vom Signalgeber 106 aufgrund des mittels der Betätigungseinrichtung 104 gesetzten Fahrtrichtungsanzeigens 105 ausgegeben wird.

Figur 4 zeigt schematisch ein Ausführungsbeispiel eines Signalgebers 106, der mittels grafischer Symbole 118 das erste Signal 110 optisch ausgibt. Der Signalgeber 106 ist, zumindest hinsichtlich einer grafischen oder optischen Ausgabe, in einem Kombinationsinstrument am Fahrerplatz in der Fahrzeugkabine 108 des Kraftfahrzeugs 114 angeordnet. Ergänzend klingt das jeweilige grafische Symbol 118 gemäß der an der Betätigungseinrichtung 104 eingegebenen Richtung mit der ersten Frequenz des ersten Signals 110.

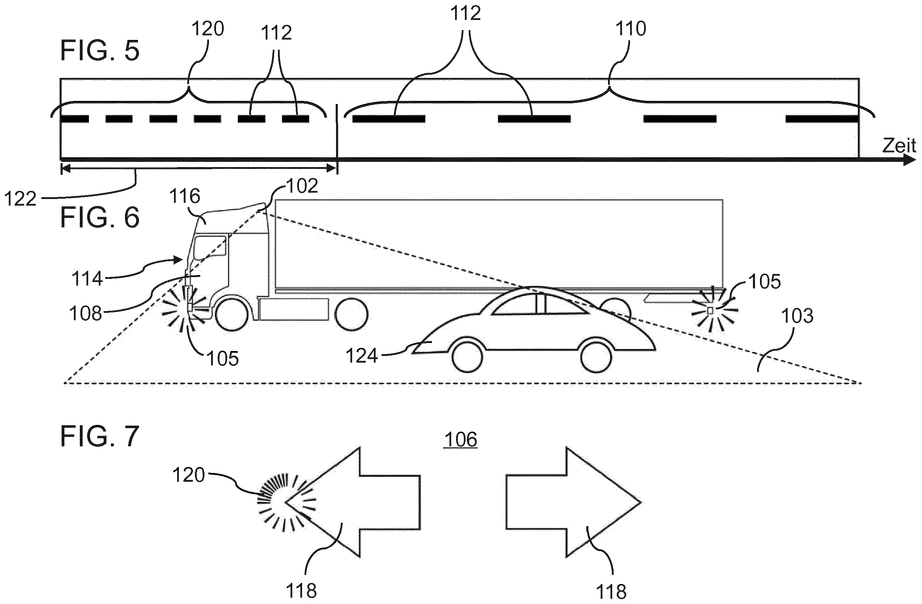

Befindet sich im Totwinkelbereich 103 des Kraftfahrzeugs 114 (d. h. insbesondere im Bereich der angestrebten Fahrbahn) dennoch ein Objekt, beispielsweise ein anderes Fahrzeug, ändert sich beim Wechsel der Fahrbahn (beispielsweise erfasst aufgrund eines entsprechend geänderten Lenkwinkels) und/oder beim Erfassen des Objekts mittels des Sensors 102 das gewohnte erste Signal 110 (beispielsweise das gewohnte Blinker-Bestätigungssignal) optisch und akustisch in das schematisch in Figur 5 als Funktion der Zeit dargestellte zweite Signal 120. Optional wird das Signal 120 vom Signalgeber 106 unmittelbar ausgegeben (unabhängig von einem vorherigen Setzen des Fahrtrichtungsanzeigers 105 mittels Betätigungseinrichtung 104) beim Erfassen eines Objekts im Totwinkelbereich 103 mittels des Sensors 102 und dem Erfassen eines beabsichtigten Fahrspurwechsels (beispielsweise aufgrund einer entsprechenden Änderung des Lenkwinkels).

Erfindungsgemäß wird das zweite Signal abwechselnd mit dem ersten Signal ausgegeben. Vorzugsweise ist die Ausgabe des zweiten Signals 120 auf eine vorbestimmte Zeitdauer 122 begrenzt. Nach Verstreichen der Zeitdauer 122 und einem fortgesetzten Erfassen des Objekts im Totwinkelbereich 103 mittels des Sensors 102 wird wieder das erste Signal 110 vom Signalgeber 106 ausgegeben.

Figur 6 zeigt schematisch die in Figur 3 gezeigte Seitenansicht des Kraftfahrzeugs 114 beim Erfassen eines Objekts 124 im Totwinkelbereich 103. Während das zweite Signal vom Signalgeber 106 innerhalb der Fahrzeugkabine 108 ausgegeben wird, ist ein Blinksignal der an der Außenhaut des Kraftfahrzeugs 114 (und gegebenenfalls damit elektrisch verbundenen Anhängern) angeordneten Fahrtrichtungsanzeigern 105 unverändert.

In der Fahrzeugkabine 108 ist das Ticken (als Grundsignal 112) des Blinkers (als Fahrtrichtungsanzeiger 105) für die herstellerabhängig festgelegte Zeitdauer 122 (beispielsweise für etwa 3 Sekunden) von der ersten Frequenz auf die zweite Frequenz erhöht. Das erste Signal 110 wird auch als Standard-Ticken bezeichnet. Sowohl das akustische Standard-Ticken als auch das optische Standard-Signal 110 zur Bestätigung des gesetzten Blinkers 105 werden für die Zeitdauer 122 die höhere zweite Frequenz annehmen, wenn das Objekt 124 vom Sensor 102 im Totwinkelbereich 103 erfasst wird. Diese Veränderung des vom Signalgeber 106 ausgegebenen ersten Signals 110 zum zweiten Signal 120 holt den Fahrer aus einer automatisierten Signalaufnahme des ersten Signals 110 heraus, da sich das bekannte Grundsignal 112 (beispielsweise das Ticken und das erwartete Blinken des entsprechenden grafischen Symbols 118) ausgehend von der gewohnten ersten Frequenz auf die ungewohnte zweite Frequenz erhöht.

Auf diese Weise ist das zweite Signal 120 nicht nur deutlich wahrnehmbar gegenüber anderen Signalen. Das zweite Signal 120 ist auch aufgrund der übereinstimmenden Herkunft vom Signalgeber 106 und/oder aufgrund des gemeinsamen Grundsignals 112 eindeutig und in kurzer Zeit als Warnmeldung vom Fahrer erkannt und dem Spurwechselvorgang oder Abbiegevorgang zugeordnet.

Erfindungsgemäß wird das zweite Signal abwechselnd mit dem ersten Signal ausgegeben.

Vorzugsweise endet das zweite Signal 120 nach der vorbestimmten Zeitdauer 122 (beispielsweise einer vom Hersteller festgelegten Zeitdauer), damit sich der Fahrer nicht langfristig (beispielsweise durch einen Gewöhnungseffekt) auf die Ausgabe des zweiten Signals 120 verlässt und einen Fahrspurwechsel "blind" durchführt. Das zweite Signal 120 entbindet somit nicht von der Eigenverantwortung beim Fahrspurwechsel.

Figur 7 zeigt schematisch den optischen Teilaspekt des Signalgebers 106 bei der in Figur 6 gezeigten Erfassung eines Objekts 124 im Totwinkelbereich 103.

Einzelne oder alle Merkmale der Figuren 2 bis 7 können in einem zweiten Ausführungsbeispiel der Vorrichtung 100 realisiert sein. Dabei kann das in den Figuren 2 und 5 schematisch dargestellte erste bzw. zweite Signal akustisch oder akustisch und zusätzlich optisch sein. Alternativ oder ergänzend (insbesondere zu den einzelnen Merkmalen der Figuren 2 bis 7) ist das zweite Ausführungsbeispiel mit dem ersten Ausführungsbeispiel kombinierbar. Hierbei sind mit übereinstimmenden Bezugszeichen beschriebene Merkmale kombinierbar oder austauschbar.

Das zweite Signal 120 dient als (akustisches und/oder optisches) Zusatzsignal für einen Spurwechselassistenten der Vorrichtung 100. Die Vorrichtung 100 kann (beispielsweise mittels des Signalgebers 106) weitere (optische und/oder akustische) Zusatzsignale ausgeben. Ferner grenzt sich das zweite Signal 120 akustisch und optisch von einem Defekt-Signal ab (mit dem der Defekt eines Fahrtrichtungsanzeigers 105 des Kraftfahrzeugs 114 in der Fahrzeugkabine 108 dem Fahrer signalisiert wird). Beispielsweise kann der Signalgeber 106 aufgrund des einheitlichen Grundsignals 112 in Verbindung mit unterschiedlichen Wiederholungsfrequenzen und/oder Tonhöhen verschiedene Mitteilungen ausgeben. Zu den Mitteilungen können gehören: ein Bestätigungssignal gemäß dem ersten Signal 110 zur Bestätigung des gesetzten Fahrtrichtungsanzeigers 105 (beispielsweise das standardmäßige Blinker-Ticken), die Warnung vor einem Objekt 124 im Totwinkelbereich 103 gemäß dem zweiten Signal 120 (beispielsweise dem Blinker-Ticken 112 mit der erhöhten zweiten Frequenz für die kurze Zeitdauer 122), und die Mitteilung eines Defekts des Fahrtrichtungsanzeigers 105 (beispielsweise indem sich die Wiederholungsfrequenz des Blinker-Tickens 112 dauerhaft ändert gegenüber dem ersten Signal 110).

Alternativ oder ergänzend können bei jedem Ausführungsbeispiel zur besseren (beispielsweise akustischen oder optischen) Durchdringung des zweiten Signals 120 (beispielsweise als Warnton) in dieser Phase (d. h. bei Erkennung des Objekts) andere Signale desselben Signalmediums im Kraftfahrzeug (z. B. andere akustische Signale, beispielsweise ein Radio etc.) unterdrückt sein. Zur Unterdrückung der anderen Signale können diese in ihrer Signalintensität gemindert oder abgeschaltet (beispielsweise stumm oder lautlos) werden.

In einer beispielhaften Ausgestaltung umfasst der Signalgeber 106 die in Figur 7 gezeigte optische Signalquelle im Kombinationsinstrument eines LKWs 114. In einer Konkretisierung der in Figur 6 gezeigten Situation befindet sich der LKW auf einer 3-spurigen Autobahn. Der Fahrer des LKWs möchte einen vorausfahrenden Kleintransporter, der nur 60 km/h fährt, überholen. Im Rückspiegel vergewissert sich der LKW-Fahrer, dass sich kein Fahrzeug auf der mittleren Spur befindet. Der Fahrer übersieht jedoch, dass sich weit hinten am Horizont ein PKW mit sehr hoher Geschwindigkeit nähert, der nicht auf den Fahrspurwechsel reagiert. Der LKW-Fahrer setzt den Fahrtrichtungsanzeiger 105 und erkennt die Gefahr sofort, als das Blinker-Ticken gemäß dem zweiten Signal 120 mit einer höheren Frequenz tickt als sonst gemäß dem ersten Signal 110. Der Fahrer nimmt gleichzeitig auch das entsprechende optische Signal im Kombinationsinstrument wahr und entscheidet, auf der rechten Spur zu bleiben.

Die Vorrichtung 100 kann Zusatzfunktionen ausführen, beispielsweise wenn das Setzen des Fahrtrichtungsanzeigers 105 vergessen wird und der Fahrer trotzdem zum Fahrspurwechsel und/oder Abbiegevorgang ansetzt. Vergisst der Fahrer zu blinken, wird das zweite Signal 120 auch ohne vorherige Ausgabe des ersten Signals 110 ausgegeben. In diesem Fall löst das zweite Signal 120 als Warnsignal beim Fahrer ebenfalls keinen Schreck sondern Verwunderung aus, da der Fahrer mit dem erwartete Grundsignal aber in einer variierten Ausgabe konfrontiert ist, wodurch eine reflexartige Reaktion verhindert wird. So wird der Fahrer sensibel, aber direkt, auf beide Fehler (nämlich das Vergessen des Fahrtrichtungsanzeigers 105 und das Übersehen des Objekts 124 im Gefahrenbereich 103) aufmerksam gemacht.

Die Vorrichtung 100 kann für weitere Einsatzmöglichkeiten ausgebildet sein. Die Veränderung der Wiederholungsfrequenz gemäß dem zweiten Signal 120 gegenüber dem ersten Signal 110 kann prinzipiell in allen Fahrzeugen Anwendung finden, die am Straßenverkehr teilnehmen. Die Veränderung akustischer erster und zweiter Signale ist mit einer Veränderung anderer (z. B. optischer) Signale kombinierbar.

Vergisst der Fahrer den Fahrtrichtungsanzeiger 105 zu setzen, können auch andere (insbesondere akustische) Signale in das erste Signal 110 integriert werden als zweites Signal 120 oder als Teil des zweiten Signals 120, wodurch der Fahrer auf das Gefahrobjekt 124 aufmerksam gemacht wird. Alternativ oder ergänzend können andere Assistenzsysteme (z. B. ein Spurhalteassistent mit selektiven Bremseingriffen an einzelnen Rädern des Kraftfahrzeugs 114) in der Vorrichtung 100 implementiert sein oder von der Vorrichtung 100 gesteuert werden.

Innerhalb des Kraftfahrzeugs 114 kann die Richtung, aus welcher das zweite Signal 120 (beispielsweise eine Schallquelle und/oder Lichtquelle) vom Signalgeber 106 ausgegeben wird, die relative Position zum Kraftfahrzeug 114 oder die Fahrzeugseite des erfassten Gefahrobjekts 124 (beispielsweise auf der linken oder rechten Spur) angeben.

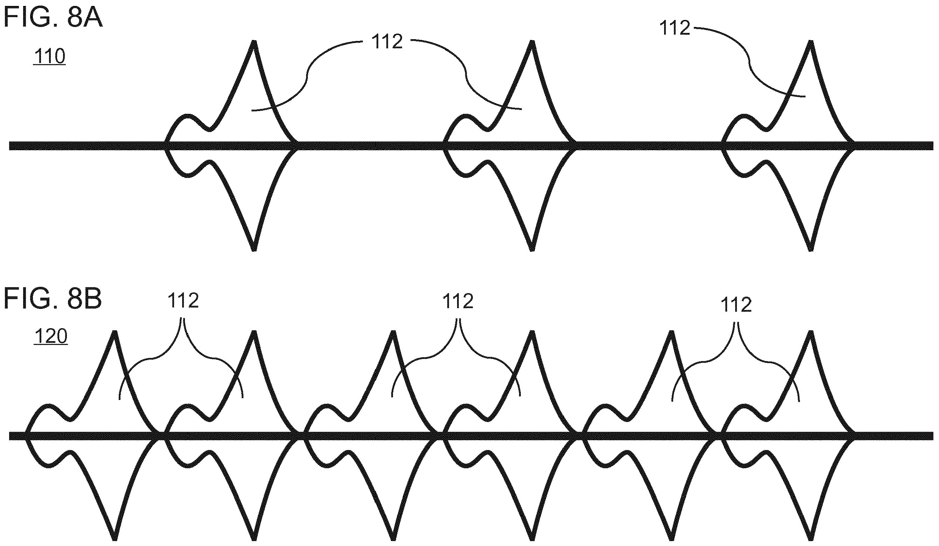

Figur 8A zeigt eine erste Implementierung des ersten Signals mittels Einhüllender der Signalamplitude in der Zeitdomäne. Die Zeit ist auf der horizontalen Achse von links nach rechts zunehmend dargestellt. Das erste Signal 110 umfasst eine periodische Wiederholung des Grundsignals 112. In Figur 8B ist schematisch das zweite Signal 120 für die erste Implementierung dargestellt. Das in seiner Dauer und Tonhöhe unveränderte Grundsignal wird im zweiten Signal 120 mit der doppelten Wiederholungsfrequenz vom Signalgeber 106 ausgegeben.

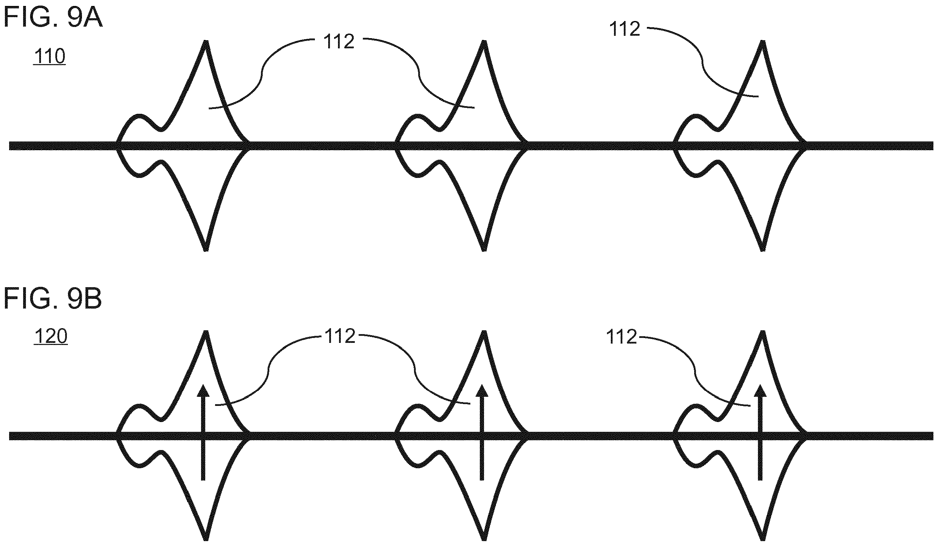

Figur 9A zeigt schematisch eine zweite Implementierung des ersten Signals 110 aus dem Grundsignal 112. Der Signalgeber 106 umfasst einen Digital-Analog-Wandler und einen damit in Verbindung stehenden Speicher, in dem das Grundsignal 112 als Spannungsfolge mit einer bestimmten Abtastrate (beispielsweise 48 kHz) gespeichert ist. Das erste Signal 110 wird vom Signalgeber 106 ausgegeben, indem der Digital-Analog-Wandler das gespeicherte Grundsignal 112 mit der ersten Frequenz wiederholt an einen Verstärker ausgibt, beispielsweise an ein Audiosystem in der Fahrzeugkabine 108.

Zur Ausgabe des in Figur 9B schematisch dargestellten zweiten Signals 120 gibt der Signalgeber 106 in einer ersten Variante das gespeicherte Grundsignal 112 mit einer höheren Abtastrate aus. Beispielsweise wird der Digital-Analog-Wandler mit 96 kHz betrieben. Alternativ oder in Kombination wird der Digital-Analog-Wandler weiterhin mit 48 kHz betrieben und nur jeder zweite gespeicherte Spannungswert des Grundsignals 112 oder aufeinanderfolgende, paarweise gemittelte Spannungswerte des Grundsignals 112 vom Digital-Analog-Wandler umgesetzt.

In einer zweiten Variante wird das zweite Signal 120 erzeugt, indem die Folge der gespeicherten Spannungswerte für das Grundsignal 112 des ersten Signals 110 in der Frequenzdomäne auf eine höhere Frequenz, beispielsweise die doppelte Frequenz, geändert wird. Dazu werden die Folge der gespeicherten Spannungswerte durch Fourier-Transformation in die Frequenzdomäne umgesetzt, die Frequenzanteile zur höheren Frequenz verschoben und durch inverse Fourier-Transformation in die Zeitdomäne umgesetzt. Beispielsweise wird dazu eine zweite Folge von Spannungswerten im Speicher des Signalgebers 106 gespeichert, so dass die Frequenzumsetzung nicht während des Betriebs des Signalgebers 106 ausgeführt werden muss. Die zweite Variante bietet gegenüber der ersten Variante den Vorteil, dass die Dauer des einzelnen Grundsignals 112 im ersten Signal 110 und im zweiten Signal 120 unabhängig von der Frequenzumsetzung sein kann. Vorzugsweise ist die Dauer eines Grundsignals 112 im ersten Signal 110 und die Dauer eines frequenzumgesetzten Grundsignals 112 im zweiten Signal 120 gleich lang.

Ferner sind die mit Bezug auf die Figuren 8A und 8B beschriebene erste Implementierung und die mit Bezug auf die Figuren 9A und 9B beschriebene zweite Implementierung des Signalgebers 106 miteinander kombinierbar und/oder mit jedem der vorgenannten Ausführungsbeispiele kombinierbar.

Beispielsweise kann das erste Signal 110 ein erstes Grundsignal (beispielsweise ein "Tick") 112 und ein zweites Grundsignal (beispielsweise ein "Tack") umfassen, die sich mit einer festen Periodendauer abwechseln. Das zweite Signal 120 kann das zu einer höheren Frequenz verschobene erste Grundsignal 112 (beispielsweise ein hohes "Tick") und das unveränderte zweite Grundsignal (beispielsweise ein "Tack") umfassen, die sich mit derselben Periodendauer wie im ersten Signal 110 abwechseln. Alternativ oder ergänzend kann das zweite Signal 120 das erste Grundsignal (beispielsweise ein "Tick") 112 und das zweite Grundsignal (beispielsweise ein "Tack") bei unveränderter Tonhöhe umfassen, die sich mit einer kürzeren Periodendauer (beispielsweise der Hälfte oder einem Viertel) als die Periodendauer des ersten Signals 110 abwechseln. Alternativ oder ergänzend kann das zweite Signal 120 nur das erste Grundsignal (beispielsweise ein "Tick") 112 umfassen, beispielsweise mit einer Wiederholungsrate, die größer als die Wiederholungsrate beim ersten Signal 110 ist (also größer als die inverse Periodendauer des ersten Signals 110). Alternativ oder ergänzend kann das zweite Signal 120 das unveränderte erste Grundsignal (beispielsweise ein "Tick") und das zu einer tieferen Frequenz verschobene zweite Grundsignal (beispielsweise ein tiefes "Tack") umfassen, die sich mit derselben Periodendauer wie im ersten Signal 110 abwechseln.

Anhand vorstehender Ausführungsbeispiele ist dem Fachmann ersichtlich, dass die Technik ermöglicht, statt akustischer oder optischer Signale, die den Meldungen anderer Assistenzsysteme ähneln, einen klaren Bezug zwischen der Warnung des zweiten Signals und dem beim Fahrspurwechsel erwarteten ersten Signal herzustellen. Die Gefahr einer "Abstumpfung" aufgrund der großen Menge akustischer Signale wie bei herkömmlichen Spurwechselassistenten, oder die Gefahr eine Warnmeldung zu verwechseln, fehlzuinterpretieren oder zu überhören, kann so verringert werden. Beispielsweise wird das zweite Signal mit dem gewohnten Bestätigungssignal des Fahrtrichtungsanzeigers 105 als erstes Signal (beispielsweise einem Blinker-Ticken) in Verbindung gebracht und kann dadurch sofort dem Vorgang des Fahrspurwechsels oder des Abbiegevorgangs zugeordnet werden.

Die Technik kann einen eindeutigen Zusammenhang zwischen dem vom selben Signalgeber für dasselbe Signalmedium erzeugten ersten Signal als Bestätigungssignal des Fahrtrichtungsanzeigers und dem zweiten Signals als Warnsignal herstellen, ohne dass das erste und zweite Signal verwechselt werden, beispielsweise aufgrund der zweifachen Wiederholungsfrequenz. Indem das zweite Signal für eine vorbestimmte Zeitdauer (beispielsweise für ca. 3 Sekunden) als zeitlich begrenzte Erhöhung der Wiederholfrequenz (beispielsweise ein schnelleres Blinken) gegenüber dem ersten Signal (beispielsweise dem Blinken der herkömmlichen Blinker-Signalleuchte) ausgegeben wird, wird der Fahrer auf die Gefahr aufmerksam gemacht.

Auch kann die Verwendung desselben Grundsignals im zweiten Signal ein Warnsignal erzeugen, das den Fahrer in einer konzentrierten Situation (wie dem Fahrspurwechsel) nicht erschreckt und zu reflexartigen, gefährlichen Lenkbewegungen führt. Dagegen besteht bei herkömmlichen Spurwechselassistenten mit einem plötzlichen Warnsignal, das den Fahrer auf seinen Fehler während des hochkonzentrierten Fahrspurwechsels aufmerksam machen soll, die Gefahr, dass der Fahrer erschrickt und als reflexartige Reaktion z. B. das Lenkrad ruckartig zur Seite zieht. Die Technik ermöglicht das bereits zuvor selbst ausgelöste erste Signal zum zweiten Signal zu verändern, so dass der Fahrer mittels einer Signalkontinuität unmissverständlich auf die Gefahrensituation hingewiesen wird.

Obwohl die Erfindung in Bezug auf exemplarische Ausführungsbeispiele beschrieben worden ist, ist es für einen Fachmann ersichtlich, dass verschiedene Änderungen vorgenommen werden können, die in den Schutzbereich der beigefügten Patentansprüche fallen. Ferner können viele Modifikationen vorgenommen werden, um eine bestimmte Situation oder ein bestimmtes Fahrzeugmodell an die Lehre der Erfindung anzupassen. Folglich ist die Erfindung nicht auf die offenbarten Ausführungsbeispiele beschränkt, sondern umfasst alle Ausführungsbeispiele, die in den Schutzbereich der beigefügten Patentansprüche fallen.

### Bezugszeichenliste

- 100: Vorrichtung zur Überwachung eines Totwinkelbereichs
- 102: Sensor zur Überwachung des Totwinkelbereichs
- 102': Sensorschnittstelle
- 103: Totwinkelbereich
- 104: Betätigungseinrichtung
- 105: Fahrtrichtungsanzeiger
- 106: Signalgeber
- 108: Fahrzeugkabine
- 110: Erstes Signal
- 112: Grundsignal
- 114: Kraftfahrzeug
- 116: Dach
- 118: Grafisches Symbol
- 120: Zweites Signal
- 122: Zeitdauer
- 124: Erfasstes Objekt

## Patentansprüche

1. Vorrichtung (100) zur Überwachung eines Totwinkelbereichs (103) eines Kraftfahrzeugs (114), umfassend:
mindestens einen Sensor (102) oder eine Schnittstelle (102') des mindestens einen Sensors (102), der dazu ausgebildet ist, Objekte (124) im Totwinkelbereich (103) des Kraftfahrzeugs (114) zu erfassen;
eine Betätigungseinrichtung (104), die dazu ausgebildet ist, einen Fahrtrichtungsanzeiger (105) zu setzen; und
einen Signalgeber (106), der dazu ausgebildet ist, im Kraftfahrzeug (114) ein erstes Signal (110) zur Bestätigung des gesetzten Fahrtrichtungsanzeigers (105) auszugeben,
wobei der Signalgeber (106) ferner dazu ausgebildet ist, ein vom ersten Signal (110) verschiedenes zweites Signal (120) desselben Signalmediums wie des ersten Signals (110) auszugeben, falls der mindestens eine Sensor (102) ein Objekt (124) im Totwinkelbereich (103) des Kraftfahrzeugs (114) erfasst und wobei sowohl das erste Signal (110) als auch das zweite Signal (120) ein Audiosignal innerhalb des Kraftfahrzeugs (114) umfassen, wobei das erste Signal (110) und das zweite Signal (120) Signalfolgen mit einem gemeinsamen Grundsignal (112) sind,
**dadurch gekennzeichnet, dass**
der Signalgeber (106) ferner dazu ausgebildet ist, während ein Objekt (124) erfasst wird, das zweite Signal (120) abwechselnd mit dem ersten Signal (110) auszugeben.

2. Vorrichtung nach Anspruch 1, wobei der Signalgeber (106) dazu ausgebildet ist, das erste Signal (110) und das zweite Signal (120) an derselben Stelle innerhalb des Kraftfahrzeugs (114) auszugeben.

3. Vorrichtung nach einem der Ansprüche 1 oder 2, wobei sowohl das erste Signal (110) als auch das zweite Signal (120) ein optisches Signal innerhalb des Kraftfahrzeugs (114) umfassen.

4. Vorrichtung nach Anspruch 1, wobei das erste Signal (110) und das zweite Signal (120) Wiederholungen des Grundsignals (112) umfassen.

5. Vorrichtung nach Anspruch 4, wobei die Wiederholung des Grundsignals (112) im ersten Signal (110) eine größere Periodizität aufweist als die Wiederholung des Grundsignals (112) im zweiten Signal (120).

6. Vorrichtung nach einem der Ansprüche 1 bis 5, wobei das Grundsignal (112) ein Audiosignal umfasst, und das Audiosignal im zweiten Signal (120) relativ zum Audiosignal im ersten Signal (110) zu einer höheren Frequenz verschoben ist.

7. Vorrichtung nach einem der Ansprüche 1 bis 6, wobei der Signalgeber (106) dazu ausgebildet ist, bei gesetztem Fahrtrichtungsanzeiger (105) und keinem erfassten Objekt (124) im Totwinkelbereich (103) das erste Signal (110) auszugeben.

8. Vorrichtung nach einem der Ansprüche 1 bis 7, wobei der Signalgeber (106) dazu ausgebildet ist, im Fall des erfassten Objekts (124) das zweite Signal (120) auszugeben, wenn ein Fahrspurwechsel des Kraftfahrzeugs (114) bestimmt ist.

9. Vorrichtung nach Anspruch 8, wobei der Fahrspurwechsel bestimmt ist aufgrund des gesetzten Fahrtrichtungsanzeigers (105), eines Lenkwinkels des Kraftfahrzeugs (114) und/oder einer Lage des Kraftfahrzeugs (114) relativ zu optisch erfassten Fahrbahnmarkierungen.

10. Vorrichtung nach einem der Ansprüche 1 bis 9, wobei der Signalgeber (106) dazu ausgebildet ist, im Fall des erfassten Objekts (124) die Ausgabe des zweiten Signals (120) nach einer vorbestimmten Zeitdauer (122) zu beenden.

11. Vorrichtung nach Anspruch 10, wobei der Signalgeber (106) dazu ausgebildet ist, die Ausgabe des zweiten Signals (120) in Reaktion auf das Erfassen des Objekts (124) zu beginnen und, nachdem die vorbestimmte Zeitdauer (122) verstrichen ist, bei fortdauerndem Erfassen des Objekts (124) zu beenden.

12. Kraftfahrzeug (114), insbesondere Nutzfahrzeug, mit einer Vorrichtung (100) zur Überwachung eines Totwinkelbereichs (103) des Kraftfahrzeugs (114) gemäß einem der Ansprüche 1 bis 11.

13. Kraftfahrzeug (114) nach Anspruch 12, wobei mindestens einer der Sensoren (102) seitlich am Kraftfahrzeug (114) angeordnet ist.

## Claims

1. Device (100) for monitoring a blind spot zone (103) of a motor vehicle (114), comprising:
at least one sensor (102) or an interface (102') of the at least one sensor (102), which is designed for detecting objects (124) in the blind spot zone (103) of the motor vehicle (114);
an actuating apparatus (104), which is designed for setting a direction indicator (105); and
a signal transmitter (106), which is designed for outputting, in the motor vehicle (114), a first signal (110) for confirming the set direction indicator (105), wherein the signal transmitter (106) is also designed for outputting a second signal (120), which differs from the first signal (110), from the same signal medium as the first signal (110), if the at least one sensor (102) detects an object (124) in the blind spot zone (103) of the motor vehicle (114), and wherein both the first signal (110) and the second signal (120) include an audio signal within the motor vehicle (114), wherein the first signal (110) and the second signal (120) are signal sequences having a shared basic signal (112), **characterized in that**
the signal transmitter (106) is also designed for outputting the second signal (120) in alternation with the first signal (110) while an object (124) is detected.

2. Device according to Claim 1, wherein the signal transmitter (106) is designed for outputting the first signal (110) and the second signal (120) at the same point within the motor vehicle (114).

3. Device according to either of Claims 1 and 2, wherein both the first signal (110) and the second signal (120) include a visual signal within the motor vehicle (114).

4. Device according to Claim 1, wherein the first signal (110) and the second signal (120) include repetitions of the basic signal (112).

5. Device according to Claim 4, wherein the repetition of the basic signal (112) in the first signal (110) has a greater periodicity than the repetition of the basic signal (112) in the second signal (120).

6. Device according to one of Claims 1 to 5, wherein the basic signal (112) includes an audio signal, and the audio signal in the second signal (120) is shifted to a higher frequency relative to the audio signal in the first signal (110).

7. Device according to one of Claims 1 to 6, wherein the signal transmitter (106) is designed for outputting the first signal (110) when the direction indicator (105) has been set and an object (124) has not been detected in the blind spot zone (103).

8. Device according to one of Claims 1 to 7, wherein the signal transmitter (106) is designed for outputting the second signal (120), in the event that the object (124) has been detected, when a lane change by the motor vehicle (114) has been determined.

9. Device according to Claim 8, wherein the lane change is determined on the basis of the set direction indicator (105), a steering angle of the motor vehicle (114), and/or a position of the motor vehicle (114) relative to optically detected road markings.

10. Device according to one of Claims 1 to 9, wherein the signal transmitter (106) is designed for terminating the output of the second signal (120) after a predetermined time duration (122) in the event that the object (124) has been detected.

11. Device according to Claim 10, wherein the signal transmitter (106) is designed for beginning the output of the second signal (120) in response to the detection of the object (124) and, after the predetermined time duration (122) has elapsed, terminating the output in the event of a continued detection of the object (124).

12. Motor vehicle (114), in particular commercial vehicle, comprising a device (100) for monitoring a blind spot zone (103) of the motor vehicle (114) according to one of Claims 1 to 11.

13. Motor vehicle (114) according to Claim 12, wherein at least one of the sensors (102) is arranged on the side of the motor vehicle (114).

## Revendications

1. Dispositif (100) permettant de surveiller une zone d'angle mort (103) d'un véhicule automobile (114), comprenant :
au moins un capteur (102) ou une interface (102') du au moins un capteur (102) qui est réalisé pour détecter des objets (124) dans la zone d'angle mort (103) du véhicule automobile (114) ;
un moyen d'actionnement (104) qui est réalisé pour activer un indicateur de direction (105) ; et
un émetteur de signal (106) qui est réalisé pour émettre dans le véhicule automobile (114) un premier signal (110) pour confirmer l'indicateur de direction activé (105),
dans lequel l'émetteur de signal (106) est en outre réalisé pour émettre un deuxième signal (120), différent du premier signal (110), du même support de signal que le premier signal (110) si ledit au moins un capteur (102) a détecté un objet (124) dans la zone d'angle mort (103) du véhicule automobile (114), et dans lequel à la fois le premier signal (110) et le deuxième signal (120) comprennent un signal audio à l'intérieur du véhicule automobile (114), dans lequel le premier signal (110) et le deuxième signal (120) sont des séquences de signaux avec un signal primaire commun (112),
**caractérisé en ce que** l'émetteur de signal (106) est en outre réalisé pour émettre le deuxième signal (120) en alternance avec le premier signal (110) pendant qu'un objet (124) est détecté.

2. Dispositif selon la revendication 1, dans lequel l'émetteur de signal (106) est réalisé pour émettre le premier signal (110) et le deuxième signal (120) au même endroit à l'intérieur du véhicule automobile (114) .

3. Dispositif selon l'une quelconque des revendications 1 ou 2, dans lequel à la fois le premier signal (110) et le deuxième signal (120) comprennent un signal optique à l'intérieur du véhicule automobile (114) .

4. Dispositif selon la revendication 1, dans lequel le premier signal (110) et le deuxième signal (120) comprennent des répétitions du signal primaire (112).

5. Dispositif selon la revendication 4, dans lequel la répétition du signal primaire (112) dans le premier signal (110) présente une plus grande périodicité que la répétition du signal primaire (112) dans le deuxième signal (120).

6. Dispositif selon l'une quelconque des revendications 1 à 5, dans lequel le signal primaire (112) comprend un signal audio, et le signal audio dans le deuxième signal (120) est décalé par rapport au signal audio dans le premier signal (110) vers une fréquence supérieure.

7. Dispositif selon l'une quelconque des revendications 1 à 6, dans lequel l'émetteur de signal (106) est réalisé pour émettre le premier signal (110) lorsque l'indicateur de direction (105) est activé et aucun objet (124) n'est détecté dans la zone d'angle mort (103).

8. Dispositif selon l'une quelconque des revendications 1 à 7, dans lequel l'émetteur de signal (106) est réalisé pour émettre le deuxième signal (120) en cas de détection de l'objet (124) si un changement de voie du véhicule automobile (114) est déterminé.

9. Dispositif selon la revendication 8, dans lequel le changement de voie est déterminé en raison de l'indicateur de direction activé (105), d'un angle de braquage du véhicule automobile (114) et/ou d'une position du véhicule automobile (114) par rapport à des marquages au sol détectés optiquement.

10. Dispositif selon l'une quelconque des revendications 1 à 9, dans lequel l'émetteur de signal (106) est réalisé pour terminer l'émission du deuxième signal (120) après un laps de temps prédéterminé (122) en cas de détection de l'objet (124).

11. Dispositif selon la revendication 10, dans lequel l'émetteur de signal (106) est réalisé pour commencer l'émission du deuxième signal (120) en réaction à la détection de l'objet (124), et après expiration du laps de temps prédéterminé (122), pour la terminer en cas de détection continue de l'objet (124).

12. Véhicule automobile (114), en particulier véhicule utilitaire, comprenant un dispositif (100) permettant de surveiller une zone d'angle mort (103) du véhicule automobile (114) selon l'une quelconque des revendications 1 bis 11.

13. Véhicule automobile (114) selon la revendication 12, dans lequel au moins l'un des capteurs (102) est disposé latéralement sur le véhicule automobile (114).
